# FASCICULE DE BREVET EUROPEEN

(11) **EP 3 843 203 B1**
(45) Date de publication et mention de la délivrance du brevet: **06.07.2022**
(21) Numéro de dépôt: 20213945.7
(22) Date de dépôt: 14.12.2020
(51) Int. Cl.: H01Q 1/32, H01Q 1/42, H05B 3/34, H01Q 1/02, G01S 13/931, G01S 7/40

(54) **RADÔME POUR VÉHICULE AUTOMOBILE**
RADOM FÜR KRAFTFAHRZEUG
RADOME FOR A MOTOR VEHICLE

(30) Priorité: 24.12.2019 FR 1915538
(43) Date de publication de la demande: 30.06.2021
(73) Titulaire: Compagnie Plastic Omnium SE, 69007 Lyon (FR)
(72) Inventeur: DUBOST, Elise, 01150 Sainte-Julie (FR); STABLO, Frédéric, 01150 Sainte-Julie (FR)
(74) Mandataire: LLR

(56) Documents cités:
- EP-A1- 3 476 658
- WO-A1-2019/038107
- WO-A1-2019/121757
- DE-A1-102015 004 204
- DE-A1-102018 007 404

## Description

L'invention concerne les véhicules automobiles équipés d'organes d'émission d'ondes tels que des capteurs de distance de type radar et plus particulièrement les dispositifs de protection configurés pour protéger ces capteurs.

De plus en plus de véhicules automobiles ont des pièces de carrosserie sur lesquelles sont montés des organes émettant des ondes.

Ces organes d'émission d'ondes sont par exemple un ou des radars de type ACC selon l'expression anglo-saxonne « *Adaptative Cruise Control* » émettant des ondes radio.

De tels organes d'émission d'ondes sont masqués et protégés, par exemple des intempéries, par des dispositifs de protection appelés communément « radômes ». Dans la suite de la description, le terme « radôme » est employé comme synonyme de « dispositif de protection ».

Ces dispositifs de protection sont destinés à être traversés par les ondes émises par le ou les organes d'émission d'ondes, ils doivent donc être transparents à ces dernières. On entend par « *transparent aux ondes émises par un organe d'émission d'ondes* » la capacité d'un matériau traversé par un flux d'ondes incident à transmettre une fraction supérieure à 90% du flux d'ondes le traversant.

Pour obtenir une telle transparence, l'épaisseur de la région destinée à être placée devant un radar est choisie à partir d'un ensemble de couples valeurs d'atténuation et de réflexion des ondes radar / épaisseur de la région. Cet ensemble de couples est obtenu par exemple par des mesures et calculs d'atténuation et réflexion des ondes en fonction de l'épaisseur, et également en fonction de paramètres tels que les propriétés diélectriques des matériaux utilisés pour la fabrication de la pièce, le vernis ou la peinture appliquée sur la surface de la pièce, notamment les différentes couches et leurs différentes épaisseurs qui permettent d'obtenir une peinture pour application automobile, telles que le primaire, la base et le vernis.

L'utilisation de ces dispositifs de protection peut avoir une vocation esthétique, comme cela est par exemple décrit dans la demande FR 3 070 547 A1 dans lequel le radôme comprend des moyens lumineux diffusant de la lumière à travers le dispositif de protection de manière à former un motif à la surface de ce dernier, en l'occurrence des fibres optiques, motif visible depuis l'extérieur d'un véhicule sur lequel est monté le dispositif de protection. Ce dernier est par conséquent en partie transparent à la lumière visible (pour voir le logo illuminé). On entend par « *transparent à la lumière visible* » qu'elle est au moins transparente ou translucide à tout rayonnement lumineux présentant une longueur d'onde comprise dans le spectre visible, c'est-à-dire comprise entre environ 380 et 780 nm.

De tels dispositifs de protection sont soumis aux conditions climatiques auxquelles est exposé le véhicule automobile. Il est par exemple possible que du givre se forme à leur surface. Les organes d'émission d'ondes comme les radars de type ACC peuvent voir leur fonctionnement normal déréglé par la présence d'une couche de glace, de neige ou de givre, notamment dans le cas d'une température inférieure à 10 degrés Celsius.

Un tel système de dégivrage est traditionnellement formé d'une piste chauffante constituée de fils conducteurs capables de transformer une énergie électrique en énergie thermique, associée à deux plaques de connexion à chaque extrémité de la piste chauffante afin de l'alimenter en un courant électrique, le tout étant positionné sur un élément pour pièce de carrosserie et à proximité d'un capteur. L'énergie thermique ainsi dégagée permet de dégivrer localement la pièce dans le cas où une couche de givre s'est formée. La piste chauffante, pour éviter de perturber le passage des ondes électromagnétiques, doit être positionnée selon une géométrie particulière désignée dans ce qui suit par un positionnement « en serpentin ». Pour la clarté de l'exposé, on définit une piste chauffante positionnée en « serpentin » de la façon suivante : une piste chauffante en serpentin suit un trajet en boustrophédon, à savoir un trajet qui décrit des segments parallèles avec des virages à 180° entre deux segments qui tournent alternativement dans un sens, puis dans le sens opposé à ce sens avec une distance constante entre deux segments parallèles.

Par extension, une piste positionnée en serpentin désigne une piste dont le positionnement permet le passage d'ondes électromagnétiques caractérisées par une certaine plage de fréquence.

En effet, l'exactitude du positionnement de la piste chauffante est très importante pour éviter qu'elle ne fasse obstacle au passage des ondes électromagnétiques, notamment le parallélisme entre les différents segments des pistes chauffantes et l'espacement entre ces pistes chauffantes doit être respecté très précisément. À chaque fréquence d'onde électromagnétique va correspondre une configuration du positionnement de la piste chauffante optimale pour que cette piste chauffante soit transparente vis-à-vis du passage de cette onde électromagnétique. Les documents DE 10 2015 004204 A1 et WO 2019/121757 A1 divulguent un radôme pour véhicule automobile comprenant au moins un élément chauffant. Ledit radôme combine l'éclairage du radôme avec son chauffage. Le chauffage permet d'éviter le givrage du radôme et assure la fonctionnalité d'un dispositif radar ou d'un capteur radar équipé du radôme.

L'invention a notamment pour but de fournir un radôme permettant de résoudre simplement cette problématique de perturbation de la propagation des ondes radar tout en conservant un radôme ayant un aspect visuel optimal.

A cet effet l'invention a pour objet un radôme pour véhicule automobile, caractérisé en ce qu'il comprend :
- un corps principal comprenant au moins une première zone transparente aux ondes émises par au moins un organe d'émission d'ondes et au moins partiellement transparente à la lumière visible,
- un support textile fixé sur le corps principal et recouvrant la première zone, la partie du support textile recouvrant la première zone étant transparente aux ondes émises par l'organe d'émission d'ondes, le support textile comprenant sur sa face en contact avec le corps principal des fibres optiques tissées sur le support textile et agencées pour diffuser de la lumière visible à travers la première zone et des moyens de dégivrage du radôme tissés sur le support textile.

Ainsi, on obtient un radôme alliant à la fois un aspect esthétique optimal par la présence de moyens permettant de réaliser un motif lumineux à la surface du radôme et un aspect pratique grâce à la possibilité de dégivrage du radôme afin d'assurer un passage optimal des ondes émises par le ou les organes d'émission d'ondes.

Ces deux aspects sont obtenus par un dispositif compact et d'une faible épaisseur. L'alliance d'un dispositif de dégivrage et d'un dispositif lumineux sur un même support textile permet de ne pas complexifier la conception du radôme en évitant par exemple de superposer deux dispositifs distincts assurant chacun une fonction différente.

Le radôme selon l'invention peut en outre comprendre au moins une des caractéristiques suivantes :
- le corps principal est réalisé dans un matériau choisi parmi du polyméthacrylate de méthyle, du polycarbonate, du polypropylène, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène,
- les moyens de dégivrage comprennent au moins un fil métallique,
- le fil métallique est réalisée dans un alliage choisi parmi les alliages Sn95.5/Ag3.8/Cu0.7 ou encore Sn100NiGe,
- le radôme comprend un revêtement de décor transparent aux ondes émises par l'organe d'émission d'ondes et partiellement transparent à la lumière visible disposé entre le corps principal et les fibres optiques,
- le corps principal est partiellement recouvert d'un revêtement opaque à la lumière visible, la partie transparente formant un motif décoratif,
- l'épaisseur totale du radôme est constante, et inférieure ou égale à 6 mm,
- le support textile est intercalé entre le corps principal et un support de fixation au moins partiellement transparent aux ondes émises par l'organe d'émission d'ondes au niveau d'une seconde zone destinée à être traversée par les ondes émises par l'organe d'émission d'ondes, et - le support de fixation est opaque à la lumière visible.

L'invention a également pour objet un panneau de carrosserie de véhicule automobile comprenant un radôme selon l'invention.

L'invention a également pour objet un procédé d'assemblage du radôme selon l'invention, comprenant les étapes suivantes :
- tissage des fibres optiques et des moyens de dégivrage sur le support textile,
- fixation du support textile sur le corps principal.

De préférence, on réalise un revêtement par poudre et une mise en forme du support textile avant fixation sur le corps principal.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un panneau de carrosserie comprenant un radôme ;
[Fig. 2] la figure 2 est une vue en coupe du principe de fonctionnement d'un ensemble constitué d'un organe d'émission d'ondes et d'un radôme selon l'invention ;
[Fig. 3] la figure 3 est une vue de la face interne d'un radôme selon l'invention ; et
[Fig. 4] la figure 4 est une représentation d'un exemple de disposition d'un guide de lumière diffusant et d'organes de dégivrage sur un textile.

### Description détaillée

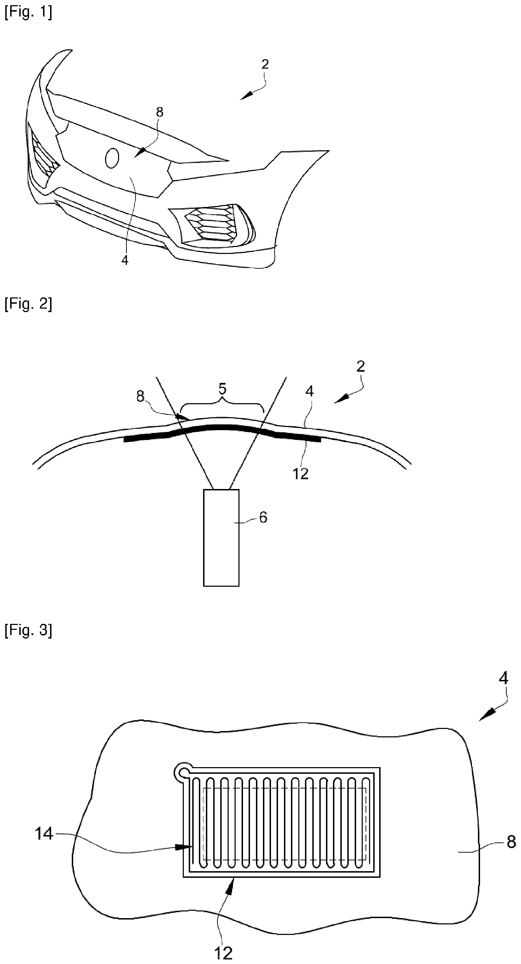

On se réfère désormais à la figure 1 qui illustre un panneau de carrosserie 2, ici un pare-chocs avant, comprenant un dispositif de protection configuré pour protéger au moins un organe d'émission d'ondes 6. Le nombre de ces organes peut bien évidemment varier.

Le dispositif de protection, appelé également radôme 4, protège un organe d'émission d'ondes 6 en position sur la face avant d'un véhicule automobile. Dans ce qui va suivre, nous décrirons l'exemple d'un radar placé derrière le radôme 4 (qui est une partie de la pièce de carrosserie 2) de façon à ce que les ondes électromagnétiques émises ou reçues par le radar traversent le radôme 4. L'homme du métier comprendra que selon sa fonction, le radar peut être monté dans une autre position du véhicule, par exemple en face arrière, en faces latérales ou sur le toit.

Comme cela est illustré à la figure 2, le radôme 4 est au moins en partie destiné à être traversé par les ondes émises par l'organe d'émission d'ondes 6.

Dès lors, il doit être transparent à ces ondes. Comme expliqué plus haut, on entend par « *transparent aux ondes émises par un organe d'émission d'ondes* » la capacité d'un matériau traversé par un flux d'ondes incident à transmettre une fraction supérieure à 90% du flux d'ondes le traversant. Pour permettre cela, un corps principal 8 du radôme 4 peut être réalisé dans un matériau choisi parmi du PMMA (polyméthacrylate de méthyle), du polycarbonate, du polypropylène, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène.

Il n'est pas obligatoire que l'intégralité du radôme 4 soit transparents aux ondes émises par l'organe d'émission d'ondes 6. En effet, et comme illustré à la figure 2, il est possible que les ondes traversent seulement une première zone 5 du corps principal 8. Dès lors, il suffit que cette première zone 5 soit transparente aux ondes émises par le dispositif d'émission d'ondes 6.

Comme expliqué plus haut, le radôme 4 comprend également un motif éclairé pouvant par exemple former un logo. Pour ce faire, le corps principal 8 est, comme cela est expliqué par la suite, partiellement transparent à la lumière visible, comme défini plus haut. Pour ce faire, les matériaux mentionnés ci-dessus peuvent être utilisés. Plus précisément, c'est la première zone 5, qui est entièrement transparente aux ondes émises par l'organe d'émission d'ondes 6, qui est également partiellement transparente à la lumière visible de manière à former un logo sur le radôme 4.

Afin de remplir les fonctions énoncées plus haut (i.e. dégivrage et signature lumineuse), le radôme 4 comprend un support textile 12 rapporté sur la face interne du corps principal 8 (face non visible par un utilisateur lorsque le panneau de carrosserie 2 comprenant le radôme 4 est monté sur un véhicule automobile).

Le support textile 12 peut être opaque à la lumière visible et est transparent aux ondes émises par l'organe d'émission d'ondes 6 a minima au niveau de sa partie recouvrant la première zone 5 du corps principal 8.

Le support textile 12 comprend tout d'abord des fibres optiques 10 tissées sur lui permettant l'émission de lumière visible à travers le corps principal 8 pour réaliser la signature lumineuse. Les fibres optiques sont aptes à diffuser de la lumière radialement à leur direction d'extension. Pour ce faire, elles peuvent être traitées avant tissage, par exemple par sablage ou encore par un traitement chimique. La lumière diffusée par les fibres optiques 10 provient d'au moins une source lumineuse pouvant par exemple être constituée d'une pluralité de diodes électroluminescentes (LEDs), la source de lumière pouvant être déportée (i.e. située en dehors de la zone traversée par les ondes, et aussi avantageusement en dehors des zones impactées par des petits chocs, comme les chocs « parking »). Les fibres optiques 10 sont transparentes aux ondes émises par le dispositif d'émission d'ondes 6, et s'étendent sur tout ou partie de la surface du support textile 12 (il s'étend à minima en regard de la première zone 5 du corps principal 8).

Les fibres optiques sont en plastique. Elles peuvent également être réalisées en verre. Elles sont disposées en nappe tissée le support textile 12. Il est possible d'obtenir une sortie de lumière radiale en traitant les fibres optiques par sablage ou encore par grattage laser afin de détériorer la surface de ces dernières.

L'atténuation par une nappe de fibres optiques des ondes radar a été mesurée avec un équipement certifié pour le contrôle de la transparence électromagnétique des radômes. Par exemple, une mesure a été effectuée pour des fibres optiques en PMMA, d'un diamètre de 500 µm, et tissées avec un fil de polyester. La nappe ainsi tissée, de 1 mm d'épaisseur, était placée entre deux plaques de polycarbonate de 3 mm d'épaisseur chacune.

Dans la bande de 76 à 77 GHz (plage d'émission des radar ACC), l'atténuation due aux deux plaques de polycarbonate seules (sans nappe de fibres optiques), mesurée en transmission (« *one way* », dans un seul sens à travers les trois épaisseurs), est 1,39 dB. A ces mêmes fréquences, l'ensemble de la nappe de fibres optiques et des deux plaques de polycarbonate présente une atténuation de 0,65 dB. L'atténuation de l'ensemble (mesurée en one-way) est en-dessous de la spécification des constructeurs automobiles pour un radôme (par exemple 1,5 dB). Les mesures montrent que la nappe de fibres optiques est transparente aux ondes électromagnétiques à 77 GHz et que l'atténuation est due à l'épaisseur des deux plaques de polycarbonate.

Le support textile 12 comprend également des moyens de dégivrage 14 du radôme 4, et ce afin d'éviter la perturbation des ondes émises comme expliqué plus haut.

Les moyens de dégivrage peuvent par exemple comprendre un ou plusieurs fils métalliques pouvant par exemple contenir du cuivre ou de l'argent. Il peut s'agir d'un alliage métallique combinant au moins un élément conducteur et au moins un élément résistif. A ce titre, un alliage pouvant être utilisé est un alliage comprenant de l'étain (élément résistif) et de l'argent (élément conducteur). Des exemples d'alliages pouvant être utilisés sont les alliages Sn95.5/Ag3.8/Cu0.7 ou encore Sn100NiGe. Ces alliages sont disponibles dans le commerce. Ils ont une conductivité thermique comprise entre 66 et 418 W/(m.K) (conductivités thermiques respectives de l'étain et de l'argent), conductivité supérieure à l'acier (très résistif) mais inférieur au cuivre (très conducteur).

Les moyens de dégivrage 14 se situent au moins en partie dans la première zone 5 du radôme 4 traversée par les ondes émises par le dispositif d'émission d'ondes 6. Ils sont donc transparents à ces dernières a minima au niveau de cette première zone 5. Cela est obtenu en respectant certains paramètres décrits pour l'utilisation de fils métalliques.

Tout d'abord, les fils métalliques s'étendent dans une direction sensiblement perpendiculaire à la polarisation de l'organe d'émission d'ondes 6. Par exemple, et pour un radar ayant classiquement une polarisation horizontale (c'est-à-dire dont les ondes se propagent dans un plan horizontal), les fils métalliques s'étendent dans une direction verticale dans la zone traversée par les ondes radar.

Il est à noter qu'il serait possible de s'affranchir de cette nécessité en utilisant des fils métalliques d'un diamètre de quelques dizaines de nanomètres. Dans ce cas, il serait possible d'envisager une disposition de fils chauffant ayant une ou des directions d'extension non perpendiculaires à la polarisation de l'organe d'émission d'ondes 6 (il serait possible d'avoir des fils se croisant).

De plus, et pour des fils métalliques dont le diamètre est supérieur à 50 µm, ces derniers sont espacés les uns des autres, au niveau de la zone traversée par les ondes, d'un pas déterminé comme cela est connu de l'homme du métier et expliqué plus haut.

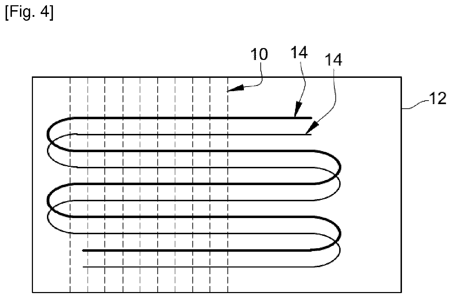

Ce pas doit être respecté dans le cas de l'utilisation d'un seul fil métallique ou de plusieurs fils métalliques, comme cela est visible sur la figure 4 (le pas entre deux fils adjacents doit être respecté). Dans le cas où plusieurs fils métalliques sont utilisés, ces derniers sont isolés les uns des autres au niveau de potentielles zones de contact (en dehors de la zone traversée par les ondes (délimitée par des pointillés sur la figure 3).

Le pas à respecter est le pas entre deux fils sur le support textile 12 une fois ce dernier rapporté sur le radôme 4. Comme expliqué par la suite, il est possible que le support textile 12 soit souple. Par conséquent, le pas entre deux fils métalliques (ou deux parties d'un même fil métallique) dans la zone traversée par les ondes au moment du tissage de ces derniers sur le support textile12 peut être différent de celui à respecter. En effet, des variations des dimensions du support textile 12 (et donc de l'écartement entre des fils ou brins de fils) peuvent se produire lors du montage du support textile 12 sur le radôme 4. Des telles variations sont prises en compte lors du tissage des fils métalliques sur le support textile 12 afin de s'assurer que l'espacement final entre deux portions de fils adjacentes (ou entre deux fils métalliques) soit conforme aux exigences susmentionnées.

A l'instar de la direction d'extension des fils métalliques, il est possible de s'affranchir de cette nécessité de pas à respecter en utilisant des fils métalliques d'un diamètre inférieur à 50 µm.

Dans le cas d'un support textile 12 souple, ce dernier peut être intercalé entre le corps principal 8 et un support de fixation afin d'être fixé sur le corps principal 8. Le support de fixation peut être réalisé en matière plastique, par exemple en matière thermoplastique. Il peut également être opaque.

De manière préférentielle, et comme cela sera expliqué par la suite, il est possible de traiter le support textile 12 avant de le rapporter sur le corps principal 8 afin de le rigidifier (et possiblement de le préformer) pour figer l'espacement entre les fils métalliques. Il est possible, lors de ce traitement, d'opacifier le support textile 12.

De manière plus générale, la transparence aux ondes est optimale si le radôme 4 est d'une épaisseur totale (corps principal 8 + support textile 12) de 6 mm.

Enfin, et au niveau de la zone destinée à être traversée par les ondes, les différents fils métalliques sont parallèles entre eux.

Les brins de fil métallique traversant la zone destinée à être traversée par les ondes peuvent être issus d'un même fil métallique ou de plusieurs fils métalliques. Il peut s'agir d'un fil ou de plusieurs fils métalliques avec plusieurs portions respectant les conditions susmentionnées (pas, parallélisme, direction d'extension) reliées entre elles par des boucles situées hors de la zone destinée à être traversée par les ondes.

Les fibres optiques 10 peuvent être tissées en trame et les moyens de dégivrage 14 en chaîne ou inversement. Il est aussi possible que les deux soient montés en trame ou en chaîne.

Comme expliqué plus haut, le radôme 4 comprend également une signature lumineuse pouvant être obtenue de plusieurs manières différentes.

Selon une première solution, il est possible de placer un revêtement de décor entre les fibres optiques 10 et le corps principal 8. Ce dernier est transparent aux ondes émises par l'organe d'émission d'ondes 6 et partiellement transparent à la lumière visible. La zone transparente à la lumière visible forme la signature lumineuse. En d'autres termes, les fibres optiques 10 peut s'apparenter à un carré lumineux, le revêtement de décor ne laissant que partiellement passer la lumière pour former la signature lumineuse.

L'invention concerne également un procédé d'assemblage d'un radôme comme décrit ci-dessus.

La première étape du procédé consiste à tisser les fibres optiques 10 ainsi que les moyens de dégivrage 14 sur le support textile 12.

Après cette étape de tissage, il est possible de traiter le support textile 12 pour le rigidifier et lui donner une forme complémentaire du corps principal 8. Cela permet également de figer la disposition des moyens de dégivrage 14 afin d'assurer une transparence optimale aux ondes. Cela peut être obtenu par un revêtement par poudre (ou poudrage) correspondant à une projection de matière thermoplastique en poudre sur le support textile 12. Cette projection est suivie d'un formage, par exemple par pressage à chaud, du support textile 12 pour lui donner sa forme finale. Par exemple, le support textile 12 de la figure 2 peut être préformé avant d'être assemblé au corps principal 8.

Alternativement, il est possible de rapporter au moins un film thermoformé (transparent aux ondes émises par l'organe d'émission d'ondes 6 voire à la lumière visible si nécessaire) sur une face du support textile 12 ou sur les deux.

Enfin, le support textile 12 est rapporté sur la face interne du corps principal 8.

L'invention n'est pas limitée aux modes de réalisation présentés et d'autres modes de réalisation apparaîtront clairement à l'homme du métier.

Il est notamment possible de créer une signature lumineuse par des moyens autres que ceux décrits ci-dessus, par exemple par projection de peinture sur les fibres optiques.

Il est également possible d'utiliser d'autres matériaux que ceux cités ci-dessus et ayant les mêmes propriétés que ces derniers, notamment la transparence aux ondes.

### Liste de références

- 2 :: panneau de carrosserie
- 4 :: radôme
- 5 :: première zone
- 6 :: organe d'émission d'ondes
- 8 :: corps principal
- 10: : fibres optiques
- 12: : support textile
- 14: : moyens de dégivrage

## Revendications

1. Radôme (4) pour véhicule automobile, comprenant
- un corps principal (8) comprenant au moins une première zone (5) transparente aux ondes émises par au moins un organe d'émission d'ondes (6) et au moins partiellement transparente à la lumière visible; le radôme **caractérisé en ce qu'**il comprend en outre:
- un support textile (12) fixé sur le corps principal (8) et recouvrant la première zone (5), la partie du support textile (12) recouvrant la première zone étant transparente aux ondes émises par l'organe d'émission d'ondes (6), le support textile (12) comprenant sur sa face en contact avec le corps principal (8) des fibres optiques (10) tissées sur le support textile (12) et agencées pour diffuser de la lumière visible à travers la première zone (5) et des moyens de dégivrage (14) du radôme (4) tissés sur le support textile (12).

2. Radôme (4) selon la revendication 1, dans lequel le corps principal (8) est réalisé dans un matériau choisi parmi du polyméthacrylate de méthyle, du polycarbonate, du polypropylène, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène.

3. Radôme (4) selon l'une des revendications précédentes, dans lequel les moyens de dégivrage (14) comprennent au moins un fil métallique.

4. Radôme (4) selon la revendication 3, dans lequel le fil métallique est réalisée dans un alliage choisi parmi les alliages Sn95.5/Ag3.8/Cu0.7 ou encore Sn100NiGe.

5. Radôme (4) selon l'une quelconque des revendications précédentes comprenant un revêtement de décor transparent aux ondes émises par l'organe d'émission d'ondes et partiellement transparent à la lumière visible disposé entre le corps principal (8) et les fibres optiques (10).

6. Radôme (4) selon l'une quelconque des revendications 1 à 4, dans lequel le corps principal (8) est partiellement recouvert d'un revêtement opaque à la lumière visible, la partie transparente formant un motif décoratif.

7. Radôme (4) selon l'une quelconque des revendications précédentes, dans lequel l'épaisseur totale du radôme (4) est constante, et inférieure ou égale à 6 mm.

8. Radôme (4) selon l'une quelconque des revendications précédentes, dans lequel le support textile (12) est intercalé entre le corps principal (8) et un support de fixation au moins partiellement transparent aux ondes émises par l'organe d'émission d'ondes (6) au niveau d'une seconde zone destinée à être traversée par les ondes émises par l'organe d'émission d'ondes (6).

9. Radôme (4) selon la revendication 8, dans lequel le support de fixation est opaque à la lumière visible.

10. Panneau de carrosserie (2) de véhicule automobile comprenant un radôme (4) selon l'une quelconque des revendications précédentes.

11. Procédé d'assemblage du radôme (4) selon l'une quelconque des revendications précédentes, comprenant les étapes suivantes :
- tissage des fibres optiques (10) et des moyens de dégivrage (14) sur le support textile (12),
- fixation du support textile (12) sur le corps principal (8).

12. Procédé d'assemblage selon la revendication 11, dans lequel on réalise un revêtement par poudre et une mise en forme du support textile (12) avant fixation sur le corps principal (8).

## Patentansprüche

1. Spoiler (4) für Kraftfahrzeuge, aufweisend
- einen Hauptkörper (8), der mindestens eine erste Zone (5) aufweist, die für die von mindestens einem Wellenemissionselement (6) ausgesendeten Wellen transparent und für das sichtbare Licht mindestens teilweise transparent ist; wobei der Spoiler **dadurch gekennzeichnet ist, dass** er außerdem aufweist:
- einen textilen Träger (12), der am Hauptkörper (8) befestigt ist und die erste Zone (5) bedeckt, wobei der Teil des textilen Trägers (12), der die erste Zone bedeckt, für die vom Wellenemissionselement (6) ausgesendeten Wellen transparent ist, der textile Träger (12) auf seiner Seite, die mit dem Hauptkörper (8) in Kontakt steht, optische Fasern (10), die in den textilen Träger (12) eingewebt und so angeordnet sind, dass sie sichtbares Licht durch die erste Zone (5) streuen, und Enteisungsmittel (14) des Spoilers (4), die in den textilen Träger (12) eingewebt sind, aufweist.

2. Spoiler (4) nach Anspruch 1, wobei der Hauptkörper (8) aus einem Material hergestellt ist, das aus Polymethylmethacrylat, Polycarbonat, Polypropylen, Polyamid, Copolyester, Acrylnitril-Butadien-Styrol, Acrylnitril-Styrol-Acrylat, Styrol-Acrylnitril, einer Mischung aus Acrylnitril-Styrol-Acrylat und Polycarbonat, einer Mischung aus Polycarbonat und Polyethylenterephthalat ausgewählt ist.

3. Spoiler (4) nach einem der vorhergehenden Ansprüche, wobei die Enteisungsmittel (14) mindestens einen Metalldraht aufweisen.

4. Spoiler (4) nach Anspruch 3, wobei der Metalldraht aus einer Legierung besteht, die aus den Legierungen Sn95.5/Ag3.8/Cu0.7 oder Sn100NiGe ausgewählt ist.

5. Spoiler (4) nach einem der vorhergehenden Ansprüche mit einer Dekorbeschichtung, die für die von dem wellenaussendenden Element ausgesandten Wellen transparent und für sichtbares Licht teilweise transparent ist und zwischen dem Hauptkörper (8) und den optischen Fasern (10) angeordnet ist.

6. Spoiler (4) nach einem der Ansprüche 1 bis 4, wobei der Hauptkörper (8) teilweise mit einer für sichtbares Licht undurchlässigen Beschichtung bedeckt ist, wobei der transparente Teil ein dekoratives Muster bildet.

7. Spoiler (4) nach einem der vorhergehenden Ansprüche, wobei die Gesamtdicke des Spoilers (4) konstant und kleiner oder gleich 6 mm ist.

8. Spoiler (4) nach einem der vorhergehenden Ansprüche, wobei ein textiler Träger (12) zwischen dem Hauptkörper (8) und einem Befestigungsträger eingefügt ist, der zumindest teilweise transparent für die von dem wellenaussendenden Element (6) ausgesandten Wellen ist, und zwar auf der Höhe einer zweiten Zone, die dazu bestimmt ist, von den von dem wellenaussendenden Element (6) ausgesandten Wellen durchquert zu werden.

9. Spoiler (4) nach Anspruch 8, wobei die Befestigungshalterung für sichtbares Licht undurchsichtig ist.

10. Karosserieblech (2) eines Kraftfahrzeugs mit einem Spoiler (4) nach einem der vorhergehenden Ansprüche.

11. Verfahren zur Montage des Spoilers (4) nach einem der vorhergehenden Ansprüche, aufweisend die folgenden Schritte:
- Einweben der optischen Fasern (10) und der Enteisungsmittel (14) in den textilen Träger (12),
- Befestigen des textilen Trägers (12) am Hauptkörper (8).

12. Montageverfahren nach Anspruch 11, bei dem eine Pulverbeschichtung und eine Formgebung des textilen Trägers (12) vor der Befestigung am Hauptkörper (8) durchgeführt wird.

## Claims

1. Radome (4) for motor vehicle comprising:
- a main body (8) comprising at least one first zone (5) transparent to the waves emitted by at least one wave emitting organ (6) and at least partially transparent to visible light; the radome being **characterized in that** it comprises:
- a textile support (12) attached on the main body (8) and covering the first zone (5), the part of the textile support (12) covering the first zone being transparent to the waves emitted by the wave emitting organ (6), the textile support (12) comprising on its face in contact with the main body (8) optical fibers (10) woven on the textile support (12) and arranged to diffuse visible light through the first zone (5) and defrosting means (14) of the radome (4) woven on the textile support (12).

2. Radome (4) according to claim 1, wherein the main unit (8) is made of a material selected from polymethyl methacrylate, polycarbonate, polypropylene, polyamide, copolyester, acrylonitrile butadiene styrene, acrylonitrile styrene acrylate, styrene acrylonitrile, a mixture of acrylonitrile styrene acrylate and polycarbonate, a mixture of polycarbonate and polyethylene terephthalate.

3. Radome (4) according to any one of the preceding claims, wherein the defrosting means (14) comprise at least one metal wire.

4. Radome (4) according to claim 3, wherein the metal wire is made of an alloy selected from alloys Sn95.5 / Ag 3.8 / Cu0.7 or Sn100NiGe.

5. Radome (4) according to any one of the preceding claims comprising a decorative coating transparent to the waves emitted by the wave emitting organ and partially transparent to visible light arranged between the main body (8) and the optical fibers (10).

6. Radome (4) according to any one of claims 1 to 4, wherein the main body (8) is partially covered with a coating opaque to visible light, the transparent part forming a decorative motif.

7. Radome (4) according to any one of the preceding claims, wherein the total thickness of the radome (4) is constant, and less than or equal to 6 mm.

8. Radome (4) according to any one of the preceding claims, wherein the textile support (12) is interposed between the main body (8) and a fastening support at least partially transparent to the waves emitted by the wave emitting organ (6) at the level of a second zone intended to be crossed by the waves emitted by the wave emission organ (6).

9. Radome (4) according to claim 8, wherein the fastening support is opaque to visible light.

10. Body panel (2) of a motor vehicle comprising a radome (4) according to any of the preceding claims.

11. Method of assembling the radome (4) according to any one of the preceding claims, comprising the following steps:
- weaving of optical fibres (10) and defrosting means (14) on the textile support (12),
- attaching of the textile support (12) on the main body (8).

12. An assembly method according to claim 11, wherein a powder coating and a shaping of the textile support (12) are made before attachment on the main body (8).
